# EUROPÄISCHE PATENTSCHRIFT

(11) **EP 3 281 515 B1**
(45) Veröffentlichungstag und Bekanntmachung des Hinweises auf die Patenterteilung: **22.08.2018**
(21) Anmeldenummer: 16001783.6
(22) Anmeldetag: 08.08.2016
(51) Int. Cl.: A01G 9/02

(54) **PFLANZBEHÄLTER**
PLANT CONTAINER
JARDINIÈRE

(43) Veröffentlichungstag der Anmeldung: 14.02.2018
(73) Patentinhaber: BPG Landmaschinen GmbH, 16307 Mescherin/OT Radekow (DE)
(72) Erfinder: Genschorek, Gido, 16307 Mescherin/OT Radekow (DE)
(74) Vertreter: Kietzmann, Manfred

(56) Entgegenhaltungen:
- FR-A1- 2 355 442
- GB-A- 2 225 202
- US-A1- 2014 325 907

## Beschreibung

Die Erfindung betrifft einen Pflanzbehälter, der zu einem Pflanzturm zusammensetzbar ist für die gärtnerische und landwirtschaftliche Nutzung weg von der Fläche in die Höhe. Pflanztürme sind bekannt. So wird in der DE 20 2013 002 569 U1 vorgeschlagen, korbförmige Teile mit Pflanzerde zu füllen und aufeinander zu stellen. Als Materialien für die Pflanzkörbe werden Geflechte aus Weiden, Kunststoff oder Metall vorgeschlagen. Zur Bewässerung ist ein mit Löchern versehenes durch alle Körbe geführtes Bewässerungs- und Stabilisierungsrohr vorgesehen.

Aus der US 2013/0152468 A1 ist ein Pflanzturm bekannt, bei dem Pflanzschalen in ein Gerüst einhängbar sind. Aus der US-A-20140325907 ist auch einen Pflanzbehälter bekannt. Derartige Pflanztürme sind in erster Linie als Solitärturm Blickfang im öffentlichen Raum, im Garten und auf Terrassen geeignet. Sie bedürfen aufgrund der geringen Mengen an Pflanzsubstrat einer intensiven Pflege, insbesondere einer ausgewogenen Bewässerung. Bei großen Niederschlägen kommt es zudem zum Ausspülen von Pflanzsubstrat.

Weiter ist es bekannt, zur Bewässerung von Lärmschutzwänden in die Lärmschutzwand Pflanzkübel zu integrieren (DE 196 48 874 C1). Bekannt sind auch die vertikalen Gärten von Patrick Blanc, bei denen die Pflanzen in einer Schicht aus synthetischem Filz gehalten werden und ständig von oben kommenden Wasser umspült werden (vgl. www.designlines.de, Patrick Blanc, Interview Norman Kietzmann 2009).

Auch diese Lösungen sind technisch aufwendig und nicht für eine massenhafte Anwendung geeignet.

Aufgabe der Erfindung ist es, einen Pflanzbehälter, insbesondere einen Pflanzturm vorzuschlagen, der einfach im Aufbau ist, der sich durch Langlebigkeit auszeichnet, der sowohl gärtnerisch als auch landwirtschaftlich nutzbar ist, und kombinationsfähig ist.

Gelöst wird diese Aufgabe mit den Merkmalen des Anspruches 1, vorteilhafte Ausgestaltungen sind Gegenstand der Unteransprüche. Verwendungen benennt Anspruch 15.

Erfindungsgemäß wird ein Pflanzbehälter vorgeschlagen, der besteht aus einem Hohlkörper, dessen Wandung mindestens abschnittsweise aus übereinander und dabei waagrecht angeordneten Z-Profilen zusammengesetzt ist oder aus einem spiralförmig in der Höhe verlaufenden Z-Profil besteht, wobei die Z-Profile einen ebenen Mittelabschnitt und davon entgegengesetzt abgewinkelte Schenkel aufweisen oder eine Sinusform mit in entgegengesetzte Richtung weisenden Schenkeln und
das Zusammensetzen der Z-Profile zur Bildung einer Wandung derart vorgenommen ist, dass zwischen dem äußeren nach oben weisenden Schenkel eines unteren Z-Profils und dem inneren nach unten weisenden Schenkel des darüber verlaufenden Z-Profils ein Freiraum zum Einbringen von Saatgut und/oder Pflanzen in das den Hohlraum ausfüllende Pflanzsubstrat verbleibt.

Bevorzugt weisen die Schenkel der Z-Profile die gleiche Höhe auf.

Bei einem abgewinkelten Z-Profil weisen die Schenkel bevozugt die gleiche Höhe (H) und der Mittelabschnitt die gleiche Länge (L) wie die Höhe (H) der Schenkel auf.

Die Z-Profile können aus Kunststoff oder Aluminium bestehen, wobei Aluminium der Vorzug gegeben wird, um langlebige Pflanzbehälter zu erstellen.

Die Verwendung von Z-Profilen hat den Vorteil, dass das Pflanzsubstrat durch die Schenkel zurückgehalten wird, so dass ein Ausspülen von Pflanzsubstrat weitestgehend vermieden wird.

Bei Verwendung von rechtwinklig abgewinkelten Schenkeln weist der Pflanzbehälter eine glatte Wandung auf, die nur von den waagerechten Freiräumen zum Säen und Pflanzen unterbrochen ist.

Bei einer bevorzugten Ausführung ist der Hohlkörper quaderförmig und vollständig aus Z-Profilen zusammengesetzt. Dabei werden stangenförmige Z-Profile zur Bildung der senkrecht aufeinander stoßenden benachbarten Wandungen eingesetzt. Der nach oben weisende Schenkel des Z-Profils weist im Stangenendbereich, dem Eckbereich des Hohlkörpers, beidseitig einen Teilschlitz auf. Analog ist der nach unten weisende Schenkel ausgebildet. Dabei sind die Teilschlitze derart angeordnet, dass jeweils die Teilschlitze der aufeinanderliegenden Z-Profile der aufeinanderstoßenden Wandungen unter Bildung von Formschluss ineinandergreifen.

Die Teilschlitzhöhen weisen mindestens die Hälfte der Höhen (H) der Schenkel auf, so dass sich die Z-Profile nicht nur in den Teilschlitzen kontaktieren sondern ein Abschnitt der Stegkanten auch auf einem Mittelabschnitt des Z-Profils aufliegt oder umgekehrt.

Dabei ist die Breite (B) der Teilschlitze geringfügig größer als die Dicke (D) der Schenkel.

Dieser quaderförmige Pflanzbehälter zeichnet sich durch hohe Stabilität aus und ist bis in jede sinnvolle Höhe aufbaubar.

Da die stangenförmigen Z-Profile alle gleich sind, ist ihre Produktion effektiv und der Vertrieb kann in Bündeln vorgenommen werden in Abhängigkeit von der gewünschten Höhe - ein echter Baumarktknüller.

Bei großen Hohlkörperhöhen können zueinander in der Höhe beabstandete Laufstege vorgesehen sein, die in die nach oben weisenden Schenkel einhängbar sind.

Bei einer speziellen Ausführung können die abgewinkelten Z-Profile auch aus zusammengelegten Winkelprofilen gebildet werden.

Über die Anordnung der Teilschlitze und die Länge der Z-Profile lassen sich auch spezielle Formen von Hohlkörpern gestalten, z.B. nach oben zulaufende.

Für spezielle Anwendungsfälle der Pflanzenzucht kann bei einem quaderförmigen Hohlkörper auch nur eine oder zwei Wandungen aus stangenförmigen Z-Profilen gebildet sein, die dann beidseitig in Z-Schlitze von senkrecht angeordneten U-Profilen oder Platten einsteckbar und herausziehbar angeordnet sind.

Weiter sieht eine Ausführung vor, dass für einen zylinderförmigen Hohlkörper ringförmig ausgebildete Z-Profile zur Bildung der Wandung eingesetzt sind, wobei zwischen den Z-Profilen in der Höhe Abstandshalter eingesetzt sind.

Das spiralförmig angeordnete Z-Profil kann zur Ausbildung eines zylinderförmigen oder kegelstumpfförmigen Hohlkörpers genutzt werden, wobei zwischen den Spiralbögen des Z-Profils in der Höhe ebenfalls Abstandshalter eingesetzt sind.

Bei einer entsprechenden Größe der Pflanzbehälter kann es sinnvoll sein, Sä-, Bearbeitungs- und/oder Erntemaschinen einzusetzen. Diese können die Oberkante eines nach oben weisenden Schenkels als Fahrweg nutzen, indem sie in diesen eingehängt werden.

Als Pflanzsubstrat werden bevorzugt wasserdurchlässige und wasserspeichernde Materialien oder Zuschläge eingesetzt, z. B. Kies und/oder Sand.

Eine weitere Ausgestaltung des Pflanzbehälters sieht vor, dass die Hohlkörper bodenseitig ein Wassersammelbecken aufweisen und das Wasser mittels einer Leitung und Pumpe oben in die Hohlkörper einspeisbar. Das garantiert eine bestmögliche Ausnutzung der Ressource Wasser.

Neben der Gewinnung von Nutzpflanzen bzw. Erntegut oder die Verwendung als bepflanzter Blickfang sind die Pflanzbehälter auch miteinander kombinierbar durch Zusammenstellen und können so Wände oder Grundstücksbegrenzungen bilden.

Weiterhin sind die Pflanzbehälter auch bei der Abwasserreinigung einsetzbar.

Ein weiterer Vorteil der vorgeschlagenen Pflanzbehälter besteht darin, dass sie auch in Gebieten einsetzbar sind, wo ansonsten keine oder nur aufwendig landwirtschaftliche Produktion betrieben werden kann. Ebenso können sie temporär zur Versorgung in Krisengebieten eingesetzt werden und stehen nach dem Abbau erneut zur Verwendung zur Verfügung.

Die Erfindung soll an Ausführungsbeispielen erläutert werden. Es zeigen:
- Fig. 1: die Ecklösung für einen quaderförmigen Pflanzbehälter,
- Fig. 2: einen Schnitt durch einen Pflanzbehälter mit abgewinkeltem Z-Profil,
- Fig. 3: die Teilschlitzanordnung im Endbereich,
- Fig. 4: einen Pflanzbehälter mit einer Wand aus Z-Profilen,
- Fig. 5: einen Schnitt durch einen Pflanzbehälter mit sinusförmigem Z-Profil und
- Fig. 6: einen spiralförmig aufgebauten Pflanzbehälter.

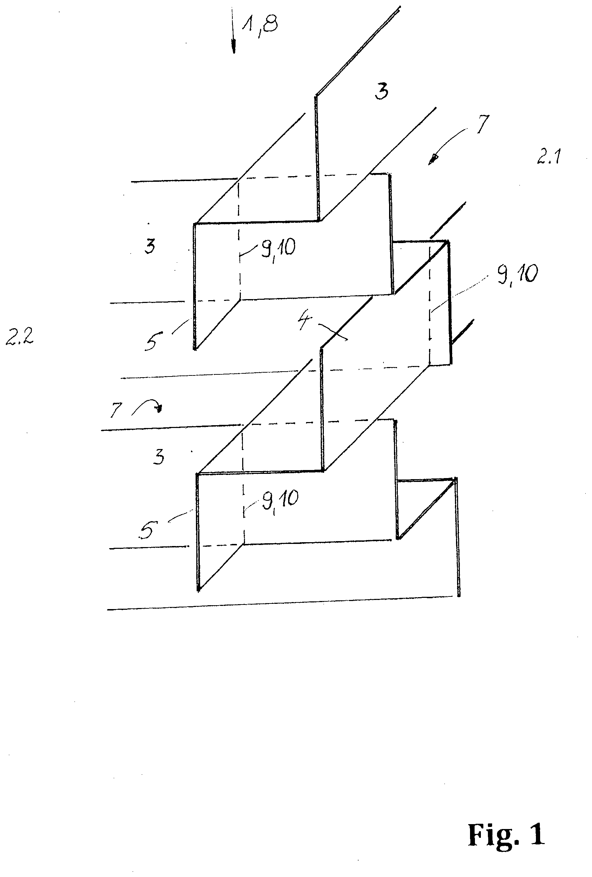

**Fig. 1** zeigt die Ecklösung für einen quaderförmigen Pflanzbehälter bestehend aus einem Hohlkörper 1, dessen Wandungen 2 aus übereinander und dabei waagerecht angeordneten stangenförmigen Z-Profilen 3 gleicher Länge zusammengesetzt sind.

Die Z-Profile 3 weisen hier einen ebenen Mittelabschnitt 6 und davon entgegengesetzt abgewinkelte Schenkel 4, 5 auf. Der Schenkel 4 weist nach oben und der Schenkel 5 nach unten.
Die Schenkel 4, 5 weisen die gleiche Höhe (H) auf und der Mittelabschnitt 6 die gleiche Länge (L), d.h. L=H.

Das Zusammensetzen der Z-Profile 3 zur Bildung der Wandungen 2.1 und 2.2, die senkrecht aufeinander stoßen, ist derart vorgenommen, dass zwischen dem äußeren nach oben weisenden Schenkel 4 eines unteren Z-Profils 3 und dem inneren nach unten weisenden Schenkel 5 des darüber angeordneten Z-Profils 3 ein Freiraum 7 zum Einbringen von Saatgut und/oder Pflanzen in das den Hohlkörper 1 ausfüllende Pflanzsubstrat 8 verbleibt.

Dazu weisen die nach oben weisende Schenkel 4 im Stangenendbereich, dem Eckbereich des Hohlkörpers 1, beidseitig einen Teilschlitz 9 und deren nach unten weisende Schenkel 5 im Stangenendbereich, dem Eckbereich des Hohlkörpers 1, beidseitig einen Teilschlitz 10 auf,
wobei die Teilschlitze 9 und 10 derart angeordnet sind, dass jeweils die Teilschlitze 9 und 10 der aufeinanderliegenden Z-Profile 3 der Wandung 2.1 und der Wandung 2.1 unter Bildung von Formschluss ineinandergreifen.

Die Teilschlitzhöhen weisen mindestens die Hälfte der Höhen (H) der Schenkel 4, 5 auf, so dass sich die Z-Profile 3 nicht nur in den Teilschlitzen 9, 10 kontaktieren, sondern ein Abschnitt der Stegkanten auch auf dem Mittelabschnitt 6 aufliegt oder umgekehrt.

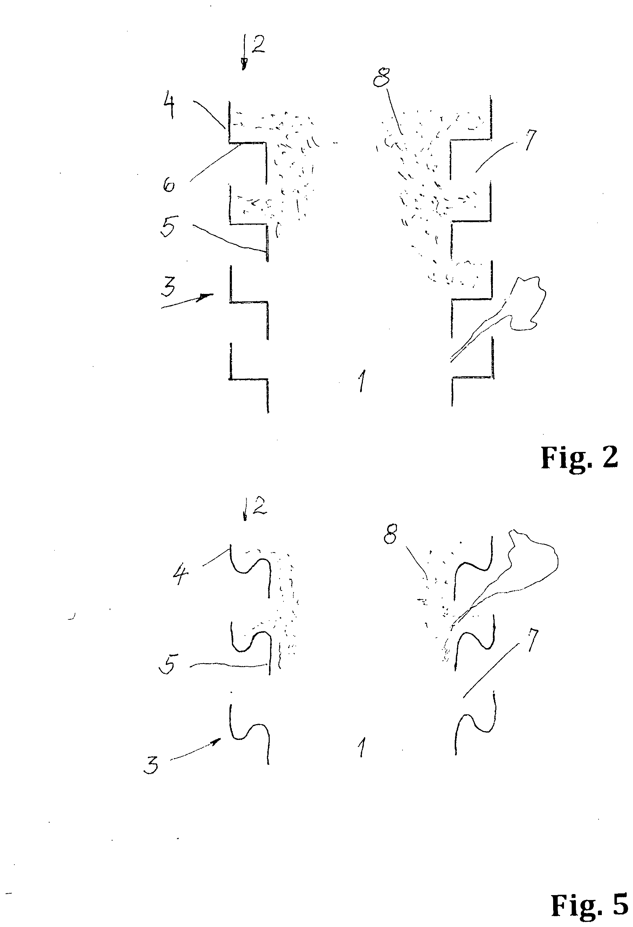

**Fig. 2** zeigt schematisch einen Schnitt durch einen quaderförmigen Pflanzbehälter. Das Zusammensetzen der Z-Profile 3 zur Bildung einer Wandung 2 ist derart vorgenommen, dass zwischen dem äußeren nach oben weisenden Schenkel 4 eines unteren Z-Profils 3 und dem inneren nach unten weisenden Schenkel 5 des darüber angeordnete Z-Profils 3 ein Freiraum 7 zum Einbringen von Saatgut und/oder Pflanzen in das den Hohlkörper 1 ausfüllende Pflanzsubstrat 8 verbleibt.

Die Schenkel 4, 5 weisen die gleiche Höhe (H) auf und der Mittelabschnitt hat die gleiche Länge (L) wie die Höhe (H) der Schenkel 4, 5.

Durch die Verwendung von rechtwinklig abgewinkelten Schenkeln 4, 5 besitzt der Pflanzbehälter eine glatte Wandung 2, die nur von den waagerechten Freiräumen 7 zum Säen und Pflanzen unterbrochen ist.

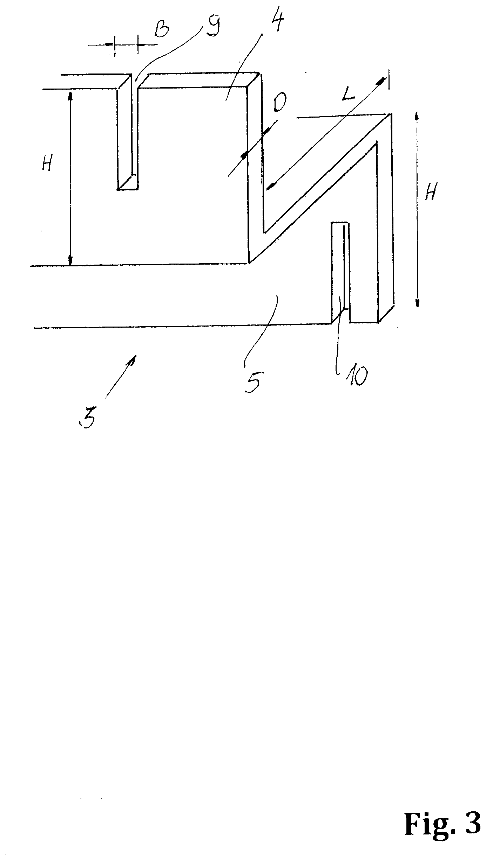

**Fig. 3** zeigt die Anordnung von Teilschlitz 9, 10 an einem Z-Profil 3 in dessen Endbereich.

Der nach oben weisende Schenkel 4 weist den Teilschlitz 9 und deren nach unten weisende Schenkel 5 den Teilschlitz 10 auf.

Die Teilschlitze 9 und 10 sind derart angeordnet, dass jeweils die Teilschlitze 9 und 10 von aufeinanderliegenden Z-Profilen 3 zusammenstoßender Wandungen 2 unter Bildung von Formschluss ineinandergreifen.
Das bedeutet bei abgewinkelten Schenkeln, dass der Mittenabstand der Teilschlitze 9, 10 der Länge (L) des Mittelabschnittes 6 beträgt.

Die Teilschlitzhöhen weist mindestens die Hälfte der Höhen (H) der Schenkel 4, 5 auf, so dass sich die Z-Profile 3 nicht nur in den Teilschlitzen 9, 10 kontaktieren, sondern ein Abschnitt der Stegkanten auch auf einem Mittelabschnitt aufliegt oder umgekehrt.

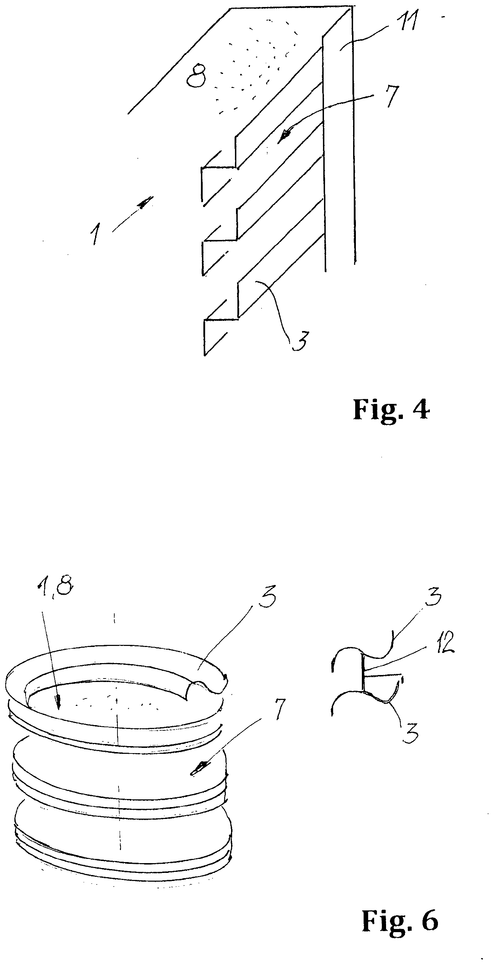

**Fig. 4** zeigt einen Pflanzbehälter mit einem quaderförmigen Hohlkörper 1, der eine Wandung 2 aus stangenförmigen Z-Profilen 3 aufweist, die beidseitig in Z-Schlitze von senkrecht angeordneten U-Profilen 11 oder Platten einsteckbar und herausziehbar angeordnet sind.
Ein derartiger Pflanzbehälter kann vorteilhaft bei der Rosenzucht genutzt werden. Zum Veredeln der aus dem Freiraum herauswachsenden Wildlinge wird der Pflanzbehälter um 90° gekippt, was das Arbeiten erleichtert und danach wieder in die dargestellte Position zurückgekippt. Die Rosentriebe können so wachsen.

Sollen die Rosen verkauft werden, werden die Z-Profile 3 herausgezogen und die Pflanze kann mit Wurzelwerk aus dem Pflanzsubstat 8 entnommen werden. Das kann vorteilhaft auch in einer um 90° gekippten Position vorgenommen werden.

**Fig. 5** zeigt schematisch einen Schnitt durch einen quaderförmigen Pflanzbehälter mit sinusförmigen Z-Profilen 3. Das Zusammensetzen der Z-Profile 3 zur Bildung einer Wandung 2 ist derart vorgenommen, dass zwischen dem äußeren nach oben weisenden Schenkel 4 eines unteren Z-Profils 3 und dem inneren nach unten weisenden Schenkel 5 des darüber angeordnete Z-Profils 3 ein Freiraum 7 zum Einbringen von Saatgut und/oder Pflanzen in das den Hohlraum 1 ausfüllende Pflanzsubstrat 8 verbleibt. Die Schenkel 4, 5 weisen die gleiche Höhe (H) auf.

**Fig. 6** zeigt einen Pflanzbehälter mit einem spiralförmig angeordneten Z-Profil 3 als Wandung 2 des Hohlkörpers 1. Zwischen den Spiralbögen des Z-Profils 3 sind in der Höhe Abstandshalter 12 eingesetzt. Zwischen dem äußeren nach oben weisenden Schenkel 4 eines unteren Spiralbogens des Z-Profils 3 und dem inneren nach unten weisenden Schenkel 5 des darüber verlaufenden Spiralbogens des Z-Profils 3 besteht der Freiraum 7 zum Einbringen von Saatgut und/oder Pflanzen in das den Hohlraum 1 ausfüllende Pflanzsubstrat 8. Das spiralförmig angeordnete Z-Profil 3 kann wie gezeigt einen zylinderförmigen aber auch einen kegelstumpfförmigen Hohlkörper 1 bilden.

### Bezugszeichenliste

- 1: Hohlkörper
- 2: Wandung des Hohlkörpers
- 3: Z-Profil
- 4: Schenkel des Z-Profils nach oben weisend
- 5: Schenkel des Z-Profils nach unten weisend
- 6: Mittelabschnitt des Z-Profils
- 7: Freiraum zum Einbringen
- 8: Pflanzsubstrat
- 9: Teilschlitz im Schenkel (4)
- 10: Teilschlitz im Schenkel (5)
- 11: U-Profil
- 12: Abstandshalter

## Patentansprüche

1. Pflanzbehälter bestehend aus einem Hohlkörper (1), dessen Wandung (2) mindestens abschnittsweise aus übereinander und dabei waagrecht angeordneten Z-Profilen (3) zusammengesetzt ist oder aus einem spiralförmig in der Höhe verlaufenden Z-Profil (3) besteht,
wobei die Z-Profile (3) einen ebenen Mittelabschnitt (6) und davon entgegengesetzt abgewinkelte Schenkel (4, 5) aufweisen oder eine Sinusform mit in entgegengesetzte Richtung weisenden Schenkeln (4, 5) und
das Zusammensetzen der Z-Profile (3) zur Bildung einer Wandung (2) derart vorgenommen ist, dass zwischen dem äußeren nach oben weisenden Schenkel (4) eines unteren Z-Profils (3) und dem inneren nach unten weisenden Schenkel (5) des darüber verlaufenden Z-Profils (3) ein Freiraum (7) zum Einbringen von Saatgut und/oder Pflanzen in das den Hohlraum (1) ausfüllende Pflanzsubstrat (8) verbleibt.

2. Pflanzbehälter nach Anspruch 1, **dadurch gekennzeichnet, dass**
die Schenkel (4, 5) die gleiche Höhe aufweisen oder bei einem abgewinkelten Z-Profil (3) die Schenkel (4, 5) die gleiche Höhe (H) und der Mittelabschnitt (6) die gleiche Länge (L) wie die Höhe (H) der Schenkel (4, 5).

3. Pflanzbehälter nach Anspruch 1 oder 2, **dadurch gekennzeichnet, dass**
bei einem quaderförmigen Hohlkörper (1) stangenförmige Z-Profile (3) zur Bildung der senkrecht aufeinander stoßenden Wandungen (2.1, 2.2) eingesetzt sind, deren nach oben weisende Schenkel (4) im Stangenendbereich, dem Eckbereich des Hohlkörpers (1), beidseitig einen Teilschlitz (9) und deren nach unten weisende Schenkel (5) im Stangenendbereich, dem Eckbereich des Hohlkörpers (1), beidseitig einen Teilschlitz (10) aufweisen, wobei die Teilschlitze (9) und (10) derart angeordnet sind, dass jeweils die Teilschlitze (9) und (10) der wechselnd aufeinanderliegenden Z-Profile (3) der Wandung (2.1) und der Wandung (2.2) unter Bildung von Formschluss ineinandergreifen.

4. Pflanzbehälter nach Anspruch 3, **dadurch gekennzeichnet, dass**
alle Wandungen (2) des quaderförmigen Hohlkörpers (1) aus in den Eckbereichen ineinandergreifenden Z-Profilen (3) gebildet sind.

5. Pflanzbehälter nach Anspruch 3 oder 4, **dadurch gekennzeichnet, dass**
die Teilschlitzhöhen mindestens die Hälfte der Höhen (H) der Schenkel (4, 5) aufweisen.

6. Pflanzbehälter nach einem der Ansprüche 3 bis 5, **dadurch gekennzeichnet, dass**
die Breite (B) der Teilschlitze (9, 10) geringfügig größer als die Dicke (D) der Schenkel (4, 5) ist.

7. Pflanzbehälter nach einem der Ansprüche 3 bis 6, **dadurch gekennzeichnet, dass**
die abgewinkelten Z-Profile (3) aus zusammengelegten Winkelprofilen gebildet sind.

8. Pflanzbehälter nach einem der Ansprüche 3 bis 7, **dadurch gekennzeichnet, dass**
bei großen Hohlkörperhöhen zueinander in der Höhe beabstandete Laufstege in die nach oben weisenden Schenkel (4) einhängbar sind.

9. Pflanzbehälter nach Anspruch 1 oder 2, **dadurch gekennzeichnet, dass**
bei einem quaderförmigen Hohlkörper (1) mindestens eine Wandung (2) aus stangenförmigen Z-Profilen (3) gebildet ist, die beidseitig in Z-Schlitze von senkrecht angeordneten U-Profilen (11) oder Platten einsteckbar und herausziehbar angeordnet sind.

10. Pflanzbehälter nach Anspruch 1 oder 2, **dadurch gekennzeichnet, dass**
für einen zylinderförmigen Hohlkörper (1) ringförmige Z-Profile (3) zur Bildung der Wandung (2) eingesetzt sind, wobei zwischen den Z-Profilen (3) in der Höhe Abstandshalter (12) eingesetzt sind.

11. Pflanzbehälter nach Anspruch 1 oder 2, **dadurch gekennzeichnet, dass**
das spiralförmig angeordnete Z-Profil (3) einen zylinderförmigen oder kegelstumpfförmigen Hohlkörper (1) bildet, wobei zwischen den Spiralbögen des Z-Profils (3) in der Höhe Abstandshalter (12) eingesetzt sind.

12. Pflanzbehälter nach einem der Ansprüche 1 bis 11, **dadurch gekennzeichnet, dass**
die Oberkante eines nach oben weisenden Schenkels (4) als Fahrweg für eine eingehängte Sä-, Bearbeitungs- und/oder Erntemaschine ausgebildet ist.

13. Pflanzbehälter nach einem der Ansprüche 1 bis 12, **dadurch gekennzeichnet, dass**
als Pflanzsubstrat (8) wasserdurchlässige und wasserspeichernde Materialien oder Zuschläge eingesetzt sind.

14. Pflanzbehälter nach einem der Ansprüche 1 bis 13, **dadurch gekennzeichnet, dass**
die Hohlkörper (1) bodenseitig ein Wassersammelbecken aufweisen und das Wasser mittels einer Leitung und Pumpe oben in die Hohlkörper (1) einspeisbar ist.

15. Verwendung der Pflanzbehälter nach einem der Ansprüche 1 bis 14 zur Abwasserreinigung oder zusammengestellt als Wand oder Grundstücksbegrenzung.

## Claims

1. A plant container consisting of a hollow body (1), the wall (2) of which is compiled at least in sections of Z profiles (3) that are arranged one on top of the other and horizontally, or of a spiral Z profile (3) that extends upwards,
whereby the Z profiles (3) have a planar middle section (6) and arms (4, 5) that are at an angle in the opposite direction, or a sinus shape with arms (4, 5) that point in the opposite direction and the compilation of the Z profiles (3) for forming a wall (2) is conducted in such a manner that between the outer arm (4) that points upwards of a lower Z profile (3) and the inner arm (5) that points downwards of the Z profile (3) that runs above it, a free space (7) remains for the insertion of seeds and/or plants into the plant substrate (8) that fills the hollow space (1) .

2. The plant container according to claim 1, **characterized in that**
the arms (4, 5) are of the same height or with an angled Z profile (3), the arms (4, 5) are of the same height (H) and the middle section (6) is of the same length (L) as the height (H) of the arms (4, 5).

3. The plant container according to claim 1 or 2, **characterized in that**
with a cuboid hollow body (1), rod-shaped Z profiles (3) are used to form the walls (2.1, 2.2) that come into contact with each other vertically, the arms (4) of which that point upwards in the rod end area, the corner area of the hollow body (1), have on both sides a partial slit (9) and their arms (5) that point downwards in the rod end area, the corner area of the hollow body (1), have a partial slit (10) on both sides,
whereby the partial slits (9) and (10) are arranged in such a manner that in each case, the partial slits (9) and (10) of the Z profiles (3) that alternately lie on top of each other of the wall (2.1) and of the wall (2.2) engage with each other to create a form-fit connection.

4. The plant container according to claim 3, **characterized in that**
all walls (2) of the cuboid hollow body (1) are formed from the Z profiles (3) that engage with each other in the corner areas.

5. The plant container according to claim 3 or 4, **characterized in that**
the partial slit heights are at least half the heights (H) of the arms (4, 5).

6. The plant container according to any one of claims 3 to 5, **characterized in that**
the breadth (B) of the partial slits (9, 10) is slightly larger than the thickness (D) of the arms (4, 5).

7. The plant container according to any one of claims 3 to 6, **characterized in that**
the angled Z profiles (3) are formed from combined angle profiles.

8. The plant container according to any one of claims 3 to 7, **characterized in that**
with large hollow body heights, runways that are at different heights are suspendable in the arms (4) that point upwards.

9. The plant container according to claim 1 or 2, **characterized in that**
with a cuboid hollow body (1), at least one wall (2) is formed from rod-shaped Z profiles (3), which are insertable on both sides into Z slits of vertically arranged U profiles (11) or panels and are arranged in such a manner that they can be pulled out.

10. The plant container according to claim 1 or 2, **characterized in that**
for a cylindrical hollow body (1), ring-shaped Z profiles (3) are inserted to form the wall (2), whereby between the Z profiles (3), spacers (12) are inserted upwards.

11. The plant container according to claim 1 or 2, **characterized in that**
the Z profile (3) with a spiral arrangement forms a cylindrical or cone stump-shaped hollow body (1), whereby between the spiral curves of the Z profile (3), spacers (12) are inserted upwards.

12. The plant container according to any one of claims 1 to 11, **characterized in that**
the upper edge of an arm (4) that points upwards is designed as a guideway for a suspended sowing, processing and/or harvesting machine.

13. The plant container according to any one of claims 1 to 12, **characterized in that**
as a plant substrate (8), water permeable and water retaining materials or supplements are used.

14. The plant container according to any one of claims 1 to 13, **characterized in that**
the hollow bodies (1) have a water collection basin on the base side and the water is feedable up into the hollow body (1) by means of a line and a pump.

15. The use of the plant container according to any one of claims 1 to 14 for cleaning waste water or compiled as a wall or plot boundary wall.

## Revendications

1. Jardinière constituée d'un corps creux (1), dont la paroi (2) est au moins partiellement composée de profilés en Z (3) superposés en étant disposés horizontalement, ou d'un profilé en Z (3) s'étendant hélicoïdalement vers le haut, lesdits profilés en Z (3) présentant une partie centrale (6) plane et des côtés (4, 5) opposés coudés par rapport à celle-ci, ou une forme sinusoïdale avec des côtés (4, 5) orientés dans des directions opposées, et l'assemblage des profilés en Z (3) pour former une paroi (2) étant effectué de manière à laisser un dégagement (7) entre le côté (4) extérieur orienté vers le haut d'un profilé inférieur en Z (3) et le côté (5) intérieur orienté vers le bas du profilé en Z (3) s'étendant au-dessus du précédent, pour l'introduction de semences et/ou de plantes dans le substrat végétal (8) remplissant la cavité (1).

2. Jardinière selon la revendication 1, **caractérisée**
**en ce que** les côtés (4, 5) ont la même hauteur ou **en ce que** pour un profilé coudé en Z (3), les côtés (4, 5) ont la même hauteur (H) et la partie centrale (6) a une longueur (L) identique à la hauteur (H) des côtés (4, 5).

3. Jardinière selon la revendication 1 ou la revendication 2, **caractérisée**
**en ce que** pour un corps creux (1) parallélépipédique, des profilés en Z (3) en forme de barres sont utilisés pour former les parois (2.1, 2.2) superposées perpendiculairement, dont les côtés (4) orientés vers le haut présentent de chaque côté une fente partielle (9) dans la zone d'extrémité de barre, la zone d'angle du corps creux (1), et dont les côtés (5) orientés vers le bas présentent de chaque côté une fente partielle (10) dans la zone d'extrémité de barre, la zone d'angle du corps creux (1), les fentes partielles (9) et (10) étant disposées de façon que les fentes partielles (9) et (10) des profilés en Z (3) superposés de manière alternée de la paroi (2.1) et de la paroi (2.2) rentrent l'une dans l'autre par engagement positif.

4. Jardinière selon la revendication 3, **caractérisée**
**en ce que** toutes les parois (2) du corps creux (1) parallélépipédique sont formées par des profilés en Z (3) engagés l'un dans l'autre dans les zones d'angles.

5. Jardinière selon la revendication 3 ou la revendication 4, **caractérisée**
**en ce que** les hauteurs des fentes partielles représentent au moins la moitié des hauteurs (H) des côtés (4, 5).

6. Jardinière selon l'une des revendications 3 à 5, **caractérisée**
**en ce que** la largeur (B) des fentes partielles (9, 10) est légèrement supérieure à l'épaisseur (D) des côtés (4, 5).

7. Jardinière selon l'une des revendications 3 à 6, **caractérisée**
**en ce que** les profilés en Z (3) coudés sont constitués de profilés en équerre assemblés.

8. Jardinière selon l'une des revendications 3 à 7, **caractérisée**
**en ce que** pour de grandes hauteurs de corps creux, des plates-formes espacées entre elles en hauteur peuvent être accrochées sur les côtés (4) orientés vers le haut.

9. Jardinière selon la revendication 1 ou la revendication 2, **caractérisée**
**en ce que** pour un corps creux (1) parallélépipédique, au moins une paroi (2) est constituée de profilés en Z (3) en forme de barres, lesquels sont disposés de chaque côté de manière à être insérables dans des fentes en Z de plaques ou de profilés en U (11) disposés verticalement, et amovibles de ceux-ci.

10. Jardinière selon la revendication 1 ou la revendication 2, **caractérisée**
**en ce que** pour un corps creux (1) cylindrique, des profilés en Z (3) annulaires sont utilisés pour former la paroi (2), des espaceurs (12) étant mis en place en hauteur entre les profilés en Z (3).

11. Jardinière selon la revendication 1 ou la revendication 2, **caractérisée**
**en ce que** le profilé en Z (3) disposé hélicoïdalement forme un corps creux (1) cylindrique ou tronconique, des espaceurs (12) étant mis en place en hauteur entre les spires du profilé en Z (3).

12. Jardinière selon l'une des revendications 1 à 11, **caractérisée**
**en ce que** le bord supérieur d'un côté (4) orienté vers le haut est réalisé comme passage pour un semoir, une machine de travail et/ou une moissonneuse.

13. Jardinière selon l'une des revendications 1 à 12, **caractérisée**
**en ce que** des matières ou des additifs perméables à l'eau et retenant l'eau sont utilisées comme substrat végétal (8).

14. Jardinière selon l'une des revendications 1 à 13, **caractérisée**
**en ce que** les corps creux (1) présentent un bassin d'accumulation d'eau sur leur fond et **en ce que** les corps creux (1) peuvent être alimentés en eau par le haut au moyen d'une conduite et d'une pompe.

15. Utilisation de la jardinière selon l'une des revendications 1 à 14 pour l'épuration des eaux usées ou en tant que paroi ou délimitation de terrain sous sa forme assemblée.
